# EUROPEAN PATENT APPLICATION

(11) **EP 0 786 876 A2**
(43) Date of publication of application: **30.07.1997**
(21) Application number: 96850201.3
(22) Date of filing: 29.11.1996
(51) Int. Cl.: H04B 7/26, H04Q 7/20

(54) **System for radio communication at short distances between transmitters and receivers**

(30) Priority: 26.01.1996 SE 9600345
(71) Applicant: TELIA AB, 123 86 Farsta (SE)
(72) Inventor: Wickman, Johan, 237 35 Bjärred (SE)
(74) Representative: Karlsson, Berne

(57) **Abstract**

The invention relates to a radio based structure for short range communication which makes possible local network access for capacity demanding broadband services in a cellular short range system such as for instance DECT. This is effected by an integration of two separate cellular systems for short range communication, where one of the systems consists of DECT and the other system consists of LMDS. The integration is essentially effected by combining DECT and LMDS so that LMDS is used for radio transmission between DECT-PP and DECT-RFP via uplink and downlink, and for transmission of broadband information in downlink. DECT is used for speech, narrow band and medium band data communication, and for transmission of authorization/encryption information so that only authorized subscriber can utilize the information which is transmitted via DECT and LMDS.

## Description

### TECHNICAL FIELD

The present invention relates to a device and a method and a system at a radio based telecommunication system for short range communication which effects local network access for capacity demanding broad band services in a cellular short range communication system such as for instance DECT.

### PRIOR ART

DECT (Digital European Cordless Telecommunications) can today cost efficiently offer surface covering telephony and data communication (< 500 kbit/s). On the other hand DECT can not offer capacity demanding broadband services such as for instance video-on-demand to a large number of users.

LMDS (Local Multi Point Distribution Services) can today cost efficiently offer distribution of video ("wireless cable-TV"). LMDS is allocated to frequency bands with a very high capacity (27,5 - 29,5 GHz and 40,5 - 42,5 GHz under the designation MVDS). LMDS is at present analog and is in its present commercial design lacking MAC-protocol for handling of trunked two-way communication. LMDS, however, will in USA and probably also in Europe be allowed to offer also two-way services such as telephony, data and video-on-demand, so development of MAC-protocols and LMDS-digitization is of very great interest. Such a development is today going on in USA; however, big series are required for profitability and possibly adaption to European standards and conditions.

A problem with existing DECT-systems is that they can only transmit narrow band and medium band information but not real broadband information.

The aim with the present invention is to solve this problem and effect an extended DECT-system which can transmit both narrow band, medium band and capacity demanding broadband information, such as for instance video information.

Previously known technology gives no solution to the above mentioned problem. The patents which exist within the LMDS-field only describe how one-way video distribution is made. On the other hand, MAC-protocols and two-way communication is not described. However, there exist prototypes for high capacity point-to-multipoint systems. These systems so far have considerably lower capacity in downlink than what the invention makes possible. Further, common baseband- and RF-technology are utilized in up- and downlink.

### BRIEF DESCRIPTION OF THE INVENTION

The above mentioned aim is attained with a device and a method and a system according to the characterizing part of the patent claims 1, 11 and 17.

One advantage with the present invention consequently is that it effects a combination of a broadband system and a narrow band system for mobile communication of the type DECT.

Another advantage with the present invention is that it solves the problem to via DECT transmit a multiple of services at the same time, such as for instance speech, picture, video, to a household.

Further advantages of the present invention are presented in the subclaims.

The invention will now be described more in detail with references to the enclosed drawings.

### BRIEF DESCRIPTION OF THE DRAWINGS

Figure 1 illustrates schematically the integration of DECT and LMDS.

Figure 2 shows cell sizes for asymmetric short range communication according to the present invention.

Figure 3 shows an embodiment of an integration of LMDS and DECT in a subscriber unit.

Figure 4 shows how the present invention utilizes different parts of band within LMDS.

Figure 5 shows an alternative embodiment of an integration of LMDS and DECT in the subscriber unit for an uplink.

Figure 6 shows schematically the integration of LMDS and DECT in combination with a repeater.

Figure 7 shows a diagram showing underlying principle of MAC-messages for handling of the broadband downlink.

### DETAILED DESCRIPTION OF AN EMBODIMENT OF THE PRESENT INVENTION

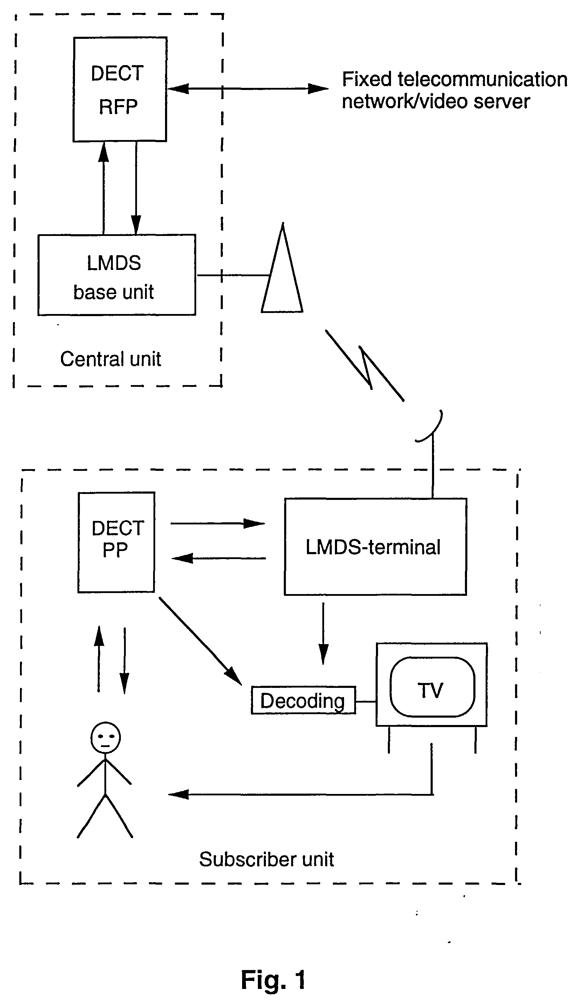

In the following an overall description of the integration of LMDS and DECT is given with reference to Figure 1.

The invention consists of the integration of two different systems for short range communication, i.e. DECT and LMDS.

One of the cellular short range systems, which in the description is exemplified with DECT, is characterized in that it is digital, allocated to lower frequency bands (0,5 - 6 GHz) and intended for surface coverage in substance symmetric two-way communication (symmetric regarding capacity in up- and downlink).

The other cellular short range system, which in the description is exemplified with LMDS, is characterized in that it is allocated to higher and broader frequency bands (primarily the 28 GHz and/or 40 GHz MVDS-band) and wholly or partly indented for broadband transmission in downlink, for instance video distribution.

The integration is in substance made by a combination of DECT and LMDS so that LMDS is used for:
- Radio transmission between DECT-PP (PP=Portable Part) and DECT-FP (FP=Fixed Part) via up- and downlink. In an alternative embodiment another subsystem with considerably lower frequency band than LMDS-downlink is used for transmission of DECT-uplink (i.e. from PP to RFP).
- Transmission of broadband information in downlink, for instance video channels.
DECT is used for:
- Speech (for instance ADPCM 32 kbit/s), narrow and medium band data communication, for instance 32 kbit/s, 64 kbit/s, 144 kbit/s, 500 kbit/s and ISDN.
   These services are used in the same way as the different profiles in the DECT-standard prescribes, but with integration with LMDS. In that way is given possibility for a considerably broader frequency bands and more channels for DECT. One can by that manage higher capacity even with cells of the size of 5 km cell radius. DECT is nominally using 10 carriers, but is prepared for use of about 30 carriers ("extended carriers"). DECT- equipment with 30 carriers can be used in the invention in order to further increase the capacity of DECT.
- Transmission of authorization/encryption information so that only authorized person can use the information which is transmitted via DECT and LMDS, for instance pay services such as video-on-demand.
- Media Access Control for LMDS.
- Local terminal mobility in embodiment with repeaters.

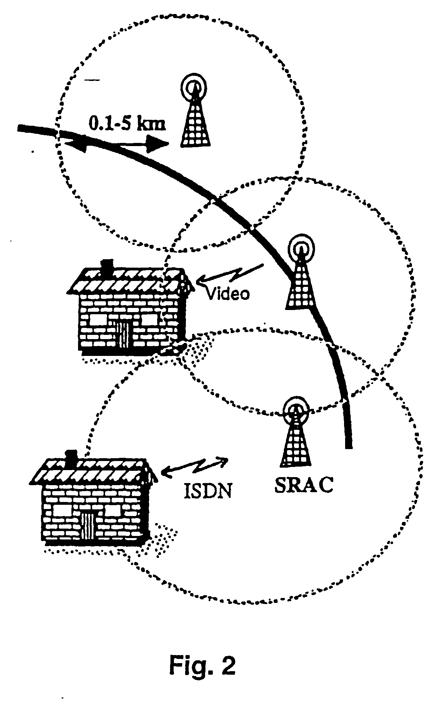

With reference to Figure 2 is shown typical cell sizes for asymmetric short range communication systems (0,1-5 km). The invention is also characterized in that the cells can have a great extent of overlapping surface coverage, so that a large number of the subscribers can be reached by more than one central unit. In that way installation of subscriber antenna is facilitated; further a larger accessibility is attained. Further, the asymmetric short range commmunication system is characterized in high directivity for subscriber antennas and low directivity for central unit antennas. In that way the uplink can be regarded as a point-to-point connection, at which the uplink has a larger number of alternative frequency bands.

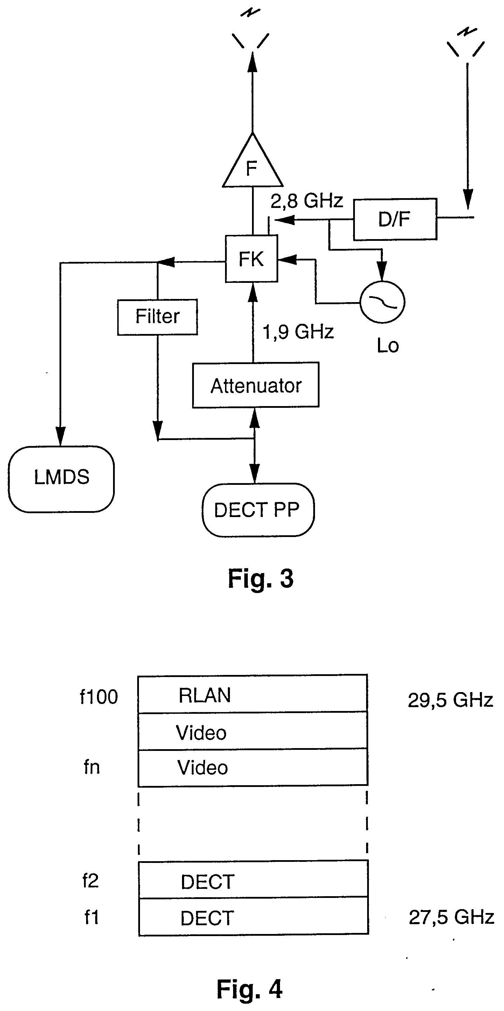

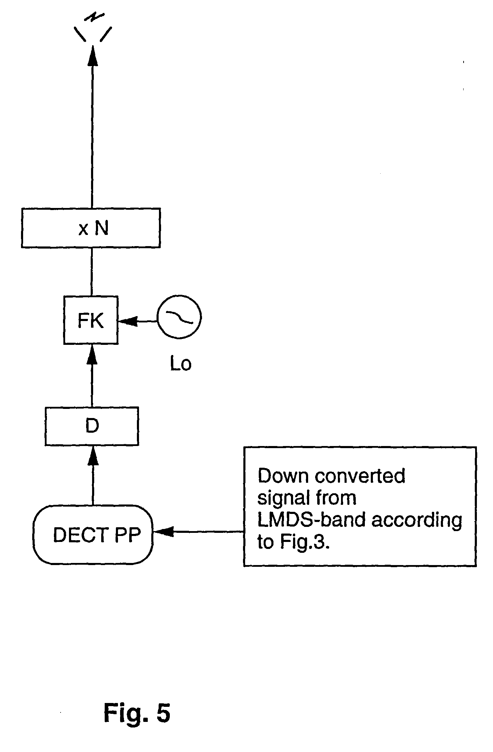

In the following a description is given of how a subscriber unit according to the present invention can be designed with reference to Figure 3. It should be noticed that a part of the received signal in the subscriber unit is used to control the local oscillator.

The output signal from DECT-PP at DECT's RF-band (for instance 1,88-1,9 GHz) is attenuated, if necessary, and is converted in frequency to the LMDS-band. The attenuation is made in order to give right input level to the frequency conversion (FK).

The local oscillator frequency LO shall be such that frequency conversion can be made to wanted partial LMDS-band (see also Figure 4).

The output signal from the frequency conversion is amplified (F) and is after that connected to a transmitter antenna. The transmitter antenna shall have high directivity.

The transmittter antenna also can constitute receiver antenna. Alterntively a separate antenna is used for reception.

Received signal is attenuated or amplified (D/F) so that correct input level is attained in the frequency conversion (FK).

After frequency conversion, received signal is connected to LMDS-receiver respective DECT-PP. Before connection to DECT-PP is effected, the partial LMDS-bands which are not carrying DECT-traffic should have been removed by filtering.

If DECT is replaced by for instance GSM or other system which utilizes frequency duplex instead of time duplex, also duplex filter should be connected between filter, attenuator and DECT-PP.

In Figure 4 is shown different partial LMDS-band. In LMDS the partial bands have the bandwidth 20 MHz, which corresponds to DECT's normal system bandwidth.

The invention also includes such a use of DECT where DECT is utilized in a multiple of partial LMDS-bands. In that way for instance a very high telephony capacity can be achieved. The allocation to different partial LMDS-bands can be fixed for a certain subscriber (for instance by a certain LO-frequency). It should however be noticed that the fixed LO-frequency should be possible to adjust with regard to reference signal or message from DECT-RFP, so that an expensive, exact oscillator should not be needed to use in the terminal.

Alternatively the partial band allocation can be dynamic by the central unit controlling which partial band the subscriber shall utilize. For example can as above the reference signal or the message from DECT-RFP be used to control the frequency of the local oscillator in the terminal. Dynamic control of the local oscillator however implies that a common LO according to Figure 3 should not be used.

Already today there exist commercial LMDS-units at low costs. Among other things there are receiver antennas with built-in frequency conversion from the LMDS-band to the 1-2 GHz-band (the IF-band for satellite receivers). This means that it is easy to realize DECT-reception by means of LMDS at a low cost. It therefore can be interesting to realize a somewhat modified integration of LMDS and DECT for uplink. Here follows an alternative embodiment of the integration for the uplink with reference to Figure 5.

Below follows a description based on principle with the terms that are used in Figure 5.
- The output signal from DECT-PP at DECT's RF-band (for instance 1,88-1,9 GHz) is converted (FK) to a frequency which is a whole multiple of wanted partial LMDS-band. Attenuation (D) is performed, if necessary, to produce right input level to the frequency conversion (typically max. 10 dBm).
- The local oscillator frequency (LO) consequently shall be selected so that conversion can be made to a whole multiple of wanted partial band.
- After that the signal is connected to a multiplier (multiplier, x N).
- The output signal from the multiplier (x N) is connected to an antenna. Filters to suppress intermodulation products may be added if necessary.

One can for instance select N = 3 at which LO = 9 GHz and DECT = 1,9 GHz gives a partial LMDS-band of 28,9 GHz. The advantage is that one can select a low LO-frequency compared with Figure 3. At that, higher frequency stability can be realized at low cost. Further, no amplifier is needed, because a multiplier (x N) typically gives 18 dBm in output power with modern technology (GaAS FET). Such multipliers already exist commercially at a low cost. 18 dBm gives sufficient output power for suggested cell structure (see Figure 2).

The embodiments have essentially described the subscriber unit. Corresponding principles are also valid for the central unit with the following changes: Downlink is changed to uplink and vice versa. DECT-PP is changed to DECT-RFP and vice versa.

As have previously been mentioned, the invention can be used for applications such as Video-on-demand. Here follows a description over how Video-on-demand can be effected according to the invention:
a. The subscriber makes a call to the central unit via DECT.
b. The subscriber requests the service.
c. The subscriber selects film by for instance indicating code/designation which can be shown in separate not encrypted menu channel via LMDS.
d. The central units checks the subscriber authorization and asks for confirmation of film selection from the subscriber.
e. The subscriber confirms film selection.
f. The central unit transmits code key (so called "tag") and channel information via DECT to the subscriber. With "tag" is meant such marking that gives sufficient information for selection of key for decoding at subscriber unit. With channel information is meant for instance information about which LMDS-channel that shall be used in downlink for distribution of the film. By the key being transmitted via DECT, security is achieved by that the the authorization and subscription etc of the subscriber can be checked. Further, information which is transmitted over DECT can be encrypted.
g. DECT-PP further transmits the key and the channel information to decoder and LMDS-terminal for decoding of respective channel selection. Transmission to decoder from DECT-PP can be made via fixed data connection. An imaginable embodiment is that PP is connected as a PCMCIA-card in the decoder.
h. The film is transmitted encoded via LMDS. The code can be changed with certain intervals during one and the same film show. New code key is in that case transmitted to authorized subscriber via DECT.
i. The subscriber can stop the film show whenever he/she wants via DECT.

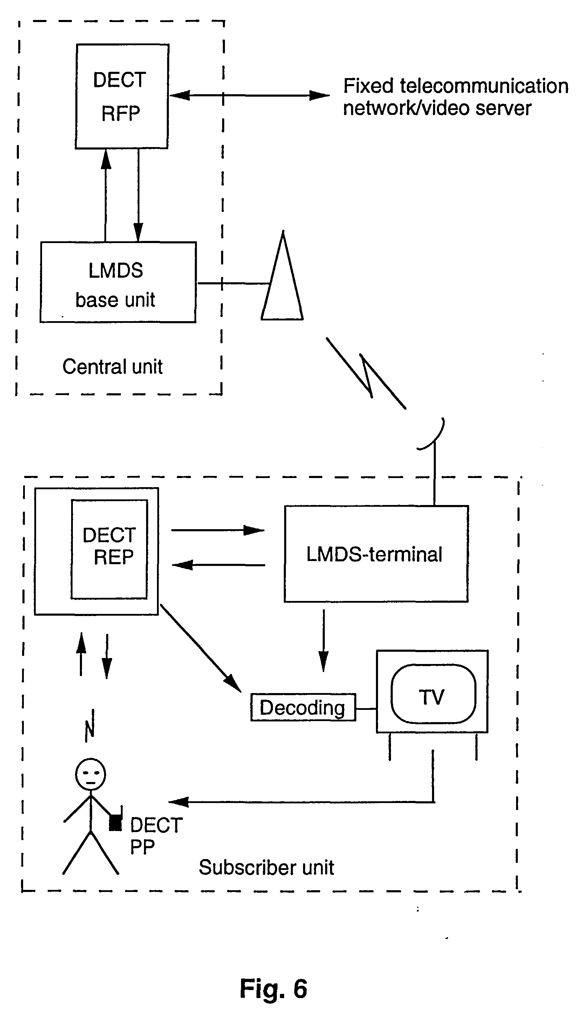

As can be seen in Figure 6 the invention also includes the integration between DECT-repeater and LMDS. The embodiment is based on repeaters (REP) according to Telia's previous patent applications.

Here follows a description of the embodiment in Figure 6. REP is integrated in the same way as in former embodiments as far as PP is concerned. The communication between REP and RFP is made on a higher frequency band than the normal DECT-band, which on the other hand is utilized for communication between PP and REP. The embodiment also can include connection between decoder and REP. Alternatively connection can be made as has previously been indicated directly from PP.

The DECT-standard among other things includes MAC-functionality. This allows for instance dynamic channel selection. The invention utilizes DECT/MAC for the partial LMDS-band which carry DECT-channels. In an alternative embodiment of the invention there is also added certain MAC-functionality for other partial LMDS-band, i.e. for the broadband downlinks.

The embodiment implies that LMDS-receiver and/or decoder can decide the quality (Q) of the received signal. Q can for instance be based on signal strength measurement, bit error measurement, or in an analog embodiment on measurement of distorsion of control tone.

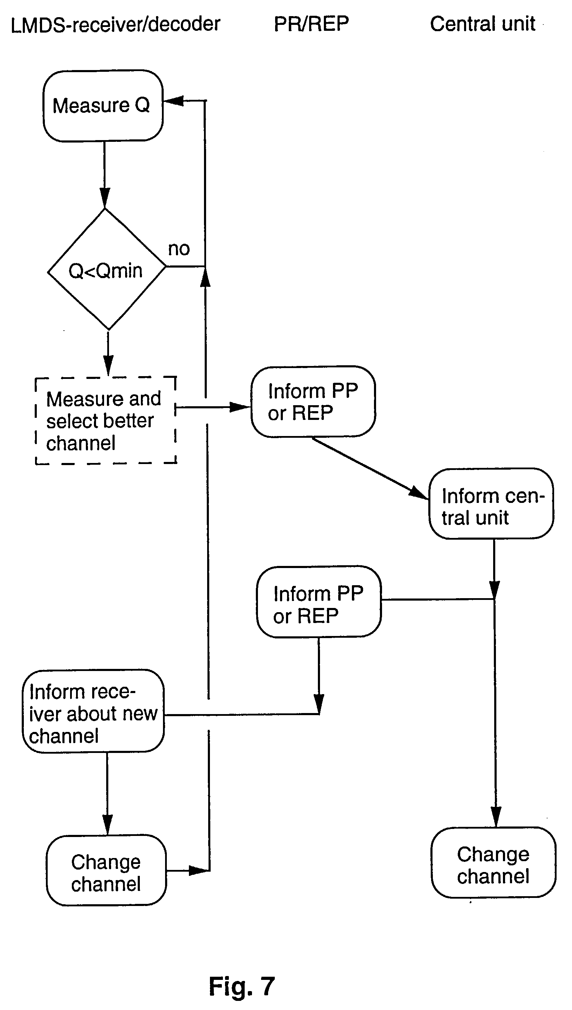

A diagram showing the principle for MAC/broadband downlink with different MAC-messages is described in Figure 7. Further communication, for instance confirmation of the MAC-messages between the different units can be added. There are a number of alternatives for how the MAC-messages can be transferred. The invention does not include detailed descriptions in this respect. The message in uplink shall at least include information about channel quality (Q) and should include suggestion for new channel: The message in downlink shall at least include decided new channel. The following methods for transmission in principle of the MAC-messages have been identified:

Transmission between LMDS-receiver/decoder and central unit can be made in form of:
- data messages over DECT. One can for instance utilize one of DECT's standardized profiles for data.
   - transmission by means of data modem via DECT's speech channel. The central unit can be regarded as a subscriber within DECT-FP at which intercall can be utilized.
   - transmission via internal DECT-message. Examples of such messages are Call Independent Supplementary Services (CISS). The standard includes a number of CISS-messages. For the application in question, however, a new type of CISS-messages need to be defined with content as above.

In common for the methods is that the wireless DECT-communication is made on a high frequency band.

At initiation of a new broadband downlink connection the corresponding method can be used. At request for the service then information about channel status can be transmitted from the subscriber to the central unit via DECT, so that transmission can start on an undisturbed channel.

As has previously been mentioned, LMDS is provided with a MAC-protocol and certain digitization by combining LMDS with DECT. Inversely one can say that LMDS is utilized to make DECT-based broadband communication possible.

The invention also can in an alterntive embodiment cost efficiently provide digital LMDS/HPMP-system with MAC-protocol and telephone services. This can be especially interesting because potential HPMP-manufacturers in most cases have their background from point-to-point applications, that is the reason for that they (for instance Bosch ATN) have not yet developed/implemented MAC-protocols to manage surface covering truncated two-way communication.

The invention also, as has been mentioned above, makes possibility for use of DECT-repeaters in capacity demanding environments and applications. Since earlier Telia holds a number of patents respective patent applications regarding repeaters for DECT (among others 9402028-6, 9203723-3). Repeaters are expected to become of great importance for DECT and are also described by the DECT-standard. However, the capacity of DECT can be somewhat reduced at use of repeaters. The invention solves this problem.

The invention makes possible that one already in the short run can realize transmission of broadband-/multimedia services (telephony, video-on-demand, interactive TV, ISDN, data communication 32- 00 kbit/s) in the connection network at a low cost. It should be noticed that the subsystems which are utilized in the invention even today is possible to obtain at a very low cost.

Because the invention utilizes wireless technology, new connection networks can be realized very quickly, compared with wire based technology. Telia therefore can utilize the invention as an important complement/alternative to fibre, coax, ADSL/HDSL to gain time and save expenses at home ground. As operator abroad Telia/Unisource can use the invention as a strategic network component in the competition against established home ground operators.

Complete standards for surface covering broadband access or interactive LMDS/MVDS-systems do not exist today. Standardization will be started this autumn within ETSI TM4. Descriptions for video distribution via LMDS and MVDS are at present produced within DVB (the work group for Digital Video Broadcasting). This work has not yet dealt with interactivity. The invention therefore may become of importance for these works within DVB respective ETSI.

The invention also can be used in applications for DECT-repeaters to increase the capacity and unload the normal DECT-band.

The invention has preliminary been verified by theoretical studies. LMDS as subsystem for video distribution has been verified by tests in the USA. The American frequency regulation authority, FCC, has taken a positive attitude to the results of the tests. The system is planned to be tested under Swedish conditions in the LMDS-project. Bearing in mind that we in Sweden have less precipitation than in the American test regions, we however do not expect any greater problems unique for Swedish conditions. DECT has so far not been tested at so high frequencies as the 28 GHz-band, but theoretically there should not be any greater problems. Sometimes time dispersion due to horizontal multipath propagation between buildings, mountains etc is stated as a threat against DECT's radio performances. But in the invention the terminal utilizes a directional antenna with very narrow lobe (about 1-3°) which will efficiently suppress possible multipath propagation. Further, the invention is intended to be utilized for the coverage (< 5 km) which can be handled by DECT's radio protocol with regard to propagation delay. One also should emphasize that the short coverage efficiently excludes disturbances caused by atmospheric multipath propagation; problems which normally make radio link systems considerably more expensive at high frequencies. According to studies within current project (LMDS++), exactly this design criterion is the determining factor to make it possible to establish surface covering broad band access at a low cost. As example can be mentioned that if the system would be required to function at 15 km range, necessary output power would have to be increased 100-1000 times for maintained accessibility at atmospherical multipath propagation. Such an increase of the output power is with today's micro- and millimeter wave technolgy impossible to realize at "consumer cost".

The integration of DECT with LMDS is neither expected to create any greater problems. Of course one has to solve problems which may arise with intermodulaton caused by simultaneous transmission and reception. This is however not unique for the invention, but is applicable to all systems which are based on frequency duplex. The problem is for instance solved with effective filters.

The above described is only to be regarded as advantageous embodiments of the present invention and the extent of protection of the invention is only defined by what is indicated in the following patent claims.

## Claims

1. Device at a radio based telecommunication system for short range communication which effects local network access for broadband services in a cellular short range system, **characterized** in that it creates said short range system by integrating two separate cellular systems for short range communication, at which one of the systems is digital, allocated to lower frequency bands and intended for surface covering two-way communication, and the other system is allocated to higher and broader frequency bands and wholly or partly intended for capacity demanding broadband communication.

2. Device according to patent claim 1,
**characterized** in that one of the cellular short range systems is a DECT-system, and the other cellular short range system is an LMDS-system.

3. Device according to patent claim 2,
**characterized** in that it provides the LMDS-system with a MAC-protocol and digitizes said system by integrating LMDS with DECT, at which LMDS is utililzed to effect DECT-based broadband communication.

4. Device according to patent claim 3,
**characterized** in that said integration effects that said LMDS is utilized for
- transmission of radio transmission between DECT-PP and DECT-RFP via uplink and dowlink, and for transmission of broadband information in downlink; and that DECT is utilized for
- transmission of speech, narrow and medium band data information and ISDN;
- transmission of authorization/encryption information so that only authorized subscriber can use the information which is transmitted via DECT and LMDS;
- Media Access Control for LMDS;
- Local terminal mobility in embodiment with repeaters.

5. Device according to patent claim 4,
**characterized** in a subscriber unit for integration of LMDS with DECT, at which output signal from DECT-PP via DECT's RF-band (for instance 1,88-1,9 GHz) is attenuated in an attenuator and frequency transformed to the LMDS-band in a frequency converter (FK) where the LO-frequency is such that transformation can be made to just any partial LMDS-band, after which said output signal is amplified in the amplifier (F) and transmitted via a transmitter antenna with high directivity and that said transmitter antenna also can be receiver antenna or utilize separate receiver antenna where received signal is attenuated or amplified in D/F so that correct input level is effected to FK, after which FK frequency transforms the received signal so it will be adapted for the LMDS-receiver and DECT-PP, at which the LMDS-band which are not carrying DECT-traffic are removed by a filter before they reach DECT-PP.

6. Device according to any of the patent claims 1-4, **characterized** in a subscriber unit for integration of LMDS with DECT for uplink, at which output signal from DECT-PP is converted in FK to a frequency which is a whole multiple of wanted partial LMDS-band by means of the local oscillator (LO), after which the signal is multiplied by a factor N in a multiplier, which multiplier is connected to an antenna with high directivity.

7. Device according to any of the patent claims 5 or 6, **characterized** in that said antenna is a directional antenna with very narrow lobe, preferably 1-3°, which efficiently suppresses multipath propagation, if any.

8. Device according to any of the previous patent claims, **characterized** in that DECT is utilized in a multiple of partial LMDS-bands, which partial bands have the bandwidth 20 MHz which corresponds to DECT's normal system bandwidth.

9. Device according to any of the previous patent claims, **characterized** in that it utilizes DECT-repeaters in capacity demanding enviroments and applications where communication between REP and RFP is made on a higher frequency band than the normal DECT-band, at which normal DECT-band is used for communication between PP and REP.

10. Device according to any of the previous patent claims, **characterized** in that it utilizes MAC-protocol for the broadband downlink, at which MAC-messages in the uplink at least include information about channel quality (Q) and suggestions for new channel, and MAC-messages in the downlink at least include decided new channel.

11. Method at a radio based telecommunication system for short range communication which effects local network access for broadband services in a cellular short range system, **characterized** in that said cellular short range system is created by an integration of two separate cellular short range systems, at which one of the systems is digital, allocated to lower frequency bands and intended for surface covering two-way commmunication, and the other system is allocated to higher and broader frequency bands and wholly or partly intended for capacity demanding broadband communication.

12. Method according to patent claim 11,
**characterized** in that one of the cellular short range systems consists of a DECT-system and the other cellular short range system consists of an LMDS-system.

13. Method according to patent claim 12,
**characterized** in that the LMDS-system is provided with a MAC-protocol and digitized by the integration of LMDS with DECT, whereby LMDS is utilized to effect DECT-based broadband communication.

14. Method according to patent claim 13,
**characterized** in that said integration is made in such a way that LMDS is used for radio transmission between DECT-PP and DECT-RFP via uplink and downlink, and for transmission of broadband information in downlink, and that DECT is used for speech, narrow band and medium band data communication, transmission of authorization/encryption information and is in addition used for Media Access Control for LMDS and local terminal mobility in the case DECT-repeaters are utilized in the system.

15. Method according to patent claim 14,
**characterized** in that DECT is utilized in a multiple of partial LMDS-bands, which partial bands have the bandwidth 20 MHz which corrresponds to DECT's normal system bandwidth.

16. Method according to patent claim 15 for execution of multimedia services, **characterized** in that it includes the steps that:
a. the subscriber calls the central unit via DECT;
b. the subscriber requests the multimedia service;
c. the subscriber selects service alternative by, for instance, indicating code/designation which is shown in a special not encrypted menu channel via LMDS;
d. the central unit checks the subscriber's authorization and requests confirmation of service alternative from said subscriber;
e. the subscriber confirms the service alternative;
f. the central unit transmits code key and channel information via DECT to the subscriber;
g. DECT-PP forwards the key and the channel information to decoder and LMDS-terminal for decoding respective channel selection, at which the transmission to decoder from DECT-PP can be made via fixed data connection;
h. the service alternative is transmitted coded via LMDS where the code can be changed at certain intervals under one and the same service alternative;
i. the subscriber can cut off the service alternative whenever he/she wants to via DECT.

17. System of cells for radio based short range communication to effect broadband services in a cellular short range system, **characterized** in that typical sizes of cells are 0,1-5 km, at which the cells have a high degree of overlapping surface coverage, so that subscribers can be reached by more than one central unit, and that subscriber antennas are arranged with high directivity whereas the antennas of the central unit is arranged with low directivity.

18. System according to patent claim 17,
**characterized** in that it creates said short range system by integrating two separate cellular systems for short range communication, at which one of them is digital, allocated to lower frequency bands and intended for surface covering two-way communication, and the other system is allocated to higher and broader frequency bands and is wholly or partly intended for capacity demanding broadband communication.

19. System according to patent claim 18,
**characterized** in that one of the cellular short range systems is a DECT-system, and the other cellular short range system is an LMDS-system.
